# EUROPÄISCHE PATENTSCHRIFT

(11) **EP 1 784 616 B1**
(45) Veröffentlichungstag und Bekanntmachung des Hinweises auf die Patenterteilung: **21.01.2009**
(21) Anmeldenummer: 05776012.6
(22) Anmeldetag: 21.07.2005
(51) Int. Cl.: G01C 21/26

(54) **VERFAHREN ZUR FREISCHALTUNG VON AUF EINEM SPEICHERMEDIUM ABGESPEICHERTEN NAVIGATIONSDATEN**
METHOD FOR RELEASING NAVIGATION DATA STORED ON A STORAGE MEDIUM
PROCEDE POUR DEBLOQUER L'ACCES A DES DONNEES DE NAVIGATION MEMORISEES DANS UN SUPPORT D'INFORMATION

(30) Priorität: 26.08.2004 DE 102004041240
(43) Veröffentlichungstag der Anmeldung: 16.05.2007
(73) Patentinhaber: ROBERT BOSCH GMBH, 70442 Stuttgart (DE)
(72) Erfinder: LUNGWITZ, Thomas, 70180 Stuttgart (DE)
(86) Internationale Anmeldenummer: PCT/EP2005/053559
(87) Internationale Veröffentlichungsnummer: WO 2006/021476

(56) Entgegenhaltungen:
- DE-A1- 10 151 002
- US-A1- 2002 069 360

## Beschreibung

### Technisches Gebiet

Die Erfindung betrifft ein Verfahren zur Freischaltung von auf einem Speichermedium abgespeicherten Navigationsdaten gemäß dem Oberbegriff des Anspruchs 1 sowie ein Navigationssystem gemäß dem Oberbegriff des Anspruchs 7.

### Stand der Technik

Aus dem Stand der Technik sind Verfahren zur Freigabe von Nutzungsrechten an Programmen und Dateien für Navigationsgeräte in Kraftfahrzeugen bekannt. Mit dem Kauf eines Navigationssystems erhält der Anwender üblicherweise auf einem Speichermedium wie zum Beispiel einer DVD oder einer CD abgespeichertes Kartenmaterial für ein weitläufiges Gebiet, wie zum Beispiel für ganz Europa. Der einzelne Anwender ist typischerweise nur an einem begrenzten Ausschnitt des Kartenmaterials interessiert, beispielsweise nur an den Straßenkartendaten seines Heimatlandes oder einem angrenzenden Land, wenn er nie mit dem eigenen Kraftfahrzeug andere Länder bereist.

In der EP 1 139 196 wird ein Verfahren zur Freigabe von Nutzungsrechten an einer auf einem Speichermedium zusammen mit mindestens einer weiteren Datei abgespeicherten und mit einer Kennung versehenen Datei zur Nutzung durch ein einziges oder eine begrenzte Anzahl von lokalen Computersystemen beschrieben. Das Verfahren eignet sich besonders für die Anwendung zur Freigabe von Nutzungsrechten am Straßenkartenmateria! in Navigationssystemen.

Für die Freischaltung der vom Anwender gewünschten Bereiche der Datenbasen auf dem Speichermedium gibt es bereits Produkte und Konzepte, welche das Ziel verfolgen, die für den Anwender anfallenden Lizenzkosten niedrig zu halten und dennoch gleichzeitig den kompletten Datensatz zur optionalen Nutzung mitzuführen. Von VDO-Dayton ist das Geschäftsmodell C-IQ (Intelligent Content on Demand) bekannt. Dabei handelt es sich um ein flexibles Softwarekonzept, bei welchem die Straßenkarteninhalte individuell ausgewählt werden können. Um einen bestimmten Navigationsinhalt zu buchen, fordert der Anwender bei einem Händler, im Internet oder telefonisch einen geeigneten Zugangscode an. Dieser wird ins Navigationssystem eingegeben und enthält Informationen über das gewünschte Anfangs- und Enddatum der Lizenz beziehungsweise über einen bestimmten Zeitraum ab Aktivierung im System und über das gewünschte Land oder Gebiet, deren Daten der Anwender anfordert.

Ein ähnliches Beispiel ist das Systemkonzept CANDy (Conditional Access for Navigation Data and Systems) aus der Abteilung CM-DI/ESN in der vorliegenden Version 0.2 vom 16.01.2004, Verfasser Listle, Holger.

Nachteil bei den genannten Konzepten ist, dass der Anwender vor der Reise Überlegungen anstellen muss, wann er welches Kartenmaterial konsultieren möchte. Er muss Kontakt, ob telefonisch oder per Internet, mit einer externen Dienststelle aufnehmen. Insbesondere, wenn der Anwender die Anzahl der Länder oder auch die Reihenfolge der Länder, welche er durchfahren möchte, zum Zeitpunkt des Fahrtantritts noch nicht kennt, ist er gezwungen, möglicherweise vom Ausland aus kostenintensiv zu telefonieren, um von dem Servicecenter die passenden Zugangscodes zu erhalten.

Aus dem Stand der Technik sind außerdem Transaktionsnummern (TAN) bekannt, welche man in Form einer Liste als Teilnehmer beim electronic banking erhält. Man benutzt diese Transaktionsnummern, um Buchungsvorgänge einzuleiten. Die Transaktionsnummer gilt als elektronische Unterschrift und verfällt nach einmaligem Gebrauch.

Die DE 101 51 002 A1 offenbart ein Verfahren zur Zieleingabe in einem Navigationssystem, bei dem Zieiinformationen erst nach einer Authentifizierung für eine mögliche Zieleingabe freigegeben werden. Die Zielsetzung ist dabei, einem Benutzer des Navigationssystems nur solche Ziele zur Ansteuerung mit seinem Navigationssystem freizugeben, zu denen er Zutrittsberechtigung hat oder erhält. Gedacht ist hier beispielsweise an ein Navigationssystem für Besucher eines Werksgeländes oder dergleichen. Dazu wird dem Benutzer ein Freischaltcode übergeben, nach dessen Eingabe ihm in Abhängigkeit des Freischaltcodes bestimmte Ziele oder Ziele in bestimmten Bereichen zur Eingabe freigegeben werden. Insbesondere ist dabei der freigegebene Bereich an den Benutzer bzw. den ihm übergebenen Freischaltcode gebunden.

### Darstellung der Erfindung, Aufgabe, Lösung, Vorteile

Aufgabe der vorliegenden Erfindung ist es, ein Verfahren anzugeben, welches dem Anwender ein Höchstmaß an Flexibilität vor aber auch während der Reise mit dem Kraftfahrzeug bietet.

Diese Aufgabe wird durch ein Verfahren der oben genannten Art mit den im Anspruch 1 gekennzeichneten Merkmalen sowie durch ein Navigationssystem mit den im Anspruch 7 gekennzeichneten Merkmalen gelöst.

Das erfindungsgemäße Verfahren umfasst folgende Schritte:
(a) Bereitstellen mindestens einer Liste, die mindestens einen, vorzugsweise mehrere Kurzzeitcodes enthält;
(b) Eingabe eines Kurzzeitcodes in das Navigationssystem durch den Anwender;
(c) Überprüfung der Gültigkeit des Kurzzeitcodes durch das Navigationssystem;
(d) Wahl eines Landes oder einer Region durch den Anwender;
(e) Freischaltung der das Straßennetz des gewählten Landes oder der gewählten Region abbildenden Straßenkartendaten zur Benutzung im Navigationssystem für einen begrenzten Zeitraum,
wobei der vierte Schritt (d) vor oder nach dem zweiten Schritt (b) oder dem dritten Schritt (c) erfolgen kann.

Dies hat den Vorteil, dass der Anwender lediglich Zugang zu einer Liste von Kurzzeitcodes im Kraftfahrzeug haben muss, um sich kurzfristig den Zugang zum Kartenmaterial verschiedener Länder verschaffen zu können. Er braucht die gewählte Route seiner Fahrt nicht vor Reiseantritt zu überdenken, da er nun, auch abhängig von der jeweiligen Verkehrssituation, kurzfristig das Gebiet auswählen kann, dessen Straßennetz freigeschaltet werden soll. Der Anwender ist nunmehr auch von der Bereitstellung externer Dienstleistungen unabhängig. Auch für den Dienstleister ergibt sich eine Kostenersparnis dadurch, dass nicht der Service eines rund um die Uhr besetzten Call-Centers bezahlt werden muss.

In einer bevorzugten Ausgestaltung der Erfindung ist vorgesehen, dass die Liste von Kurzzeitcodes dem Anwender postalisch oder elektronisch zugesandt wird. Dadurch wird eine Form zur Verfügung gestellt, welche dem Konzept der Transaktionsnummern (TAN) bei Bankgeschäften über das Internet ähnelt. Der Anwender hat voraussichtlich eine gewisse Erfahrung mit solchem Konzept.

Weiter bevorzugt ist, dass mindestens eine Liste von Kurzzeitcodes dem Navigationsgerät beim Erwerb vorliegt, insbesondere in Form eines Aufklebers, einer Plastikkarte oder dergleichen. Hierdurch wird erreicht, dass der Anwender leicht an die Funktionsweise des erfindungsgemäßen Verfahrens zur Freischaltung der Navigationsdaten gewöhnt wird.

Dabei ist bevorzugt, dass auf dem Aufkleber, der Plastikkarte oder dergleichen die letzten Zeichen durch den Anwender ergänzt werden. Dadurch ist nur eine geringe Anzahl von Aufklebern zur Generierung einer großen Anzahl von Kurzzeitcodes erforderlich. Weiter ist bevorzugt, dass eine Liste von Kurzzeitcodes nach Eingaben in das Navigationssystem eines Kennwortes, Codes oder dergleichen von dem Navigationssystem erzeugt wird. Dies hat den Vorteil, dass der Anwender die jeweiligen Kurzzeitcodes nicht manuell eingeben muss, sondern sie einfach selektieren kann, zum Beispiel durch das Anklicken einer bestimmten Position auf dem Bildschirm.

Weitere bevorzugte Ausgestaltungen der Erfindung ergeben sich aus den in den abhängigen Ansprüchen genannten Merkmalen

### Kurze Beschreibung der Zeichnungen

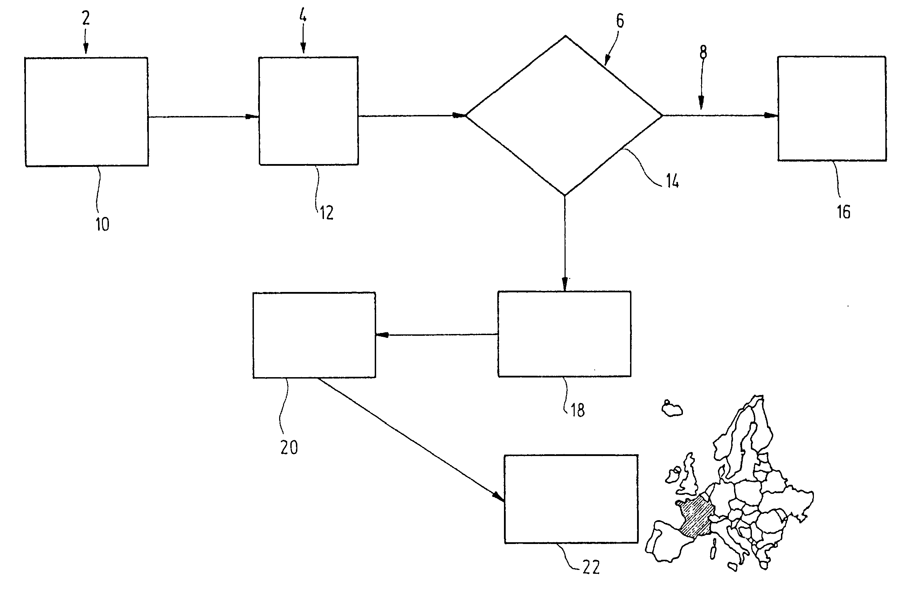

Nachstehend wird die Erfindung in einem Ausführungsbeispiel anhand der beigefügten Zeichnung, die ein Flussdiagramm des erfindungsgemäßen Verfahrens zeigt, näher erläutert.

### Bester Weg zur Ausführung der Erfindung

Ein externer Dienstleister 2 generiert eine Liste von Kurzzeitcodes 10. Der Anwender 4 erhält die Liste postalisch in derselben Form wie eine Liste von TAN-Codes für Internetbanking. Er hat nunmehr eine bestimmte Anzahl von Lizenzen, welche eine minimale zeitliche Gültigkeit haben (zum Beispiel am Kalendertag der Aktivierung oder 24 Stunden ab Aktivierung) und welche nach einmaligem Gebrauch verfallen. Der Anwender wählt bei Bedarf einen Kurzzeitcode aus der Liste aus 12. Er kann dies vor Reiseantritt oder auch während der Fahrt tun, Voraussetzung ist lediglich, dass der Anwender die Liste mit sich im Fahrzeug führt. Dies ist auch von besonderem Vorteil, wenn der Fahrzeugführer nicht Inhaber des Kraftfahrzeugs ist und beispielsweise nicht das genaue Lizenzierungsmodell der Straßenkartendaten kennt. Der Anwender kann ebenso spontan, in Abhängigkeit von der Verkehrssituation, zum Beispiel beim Auftreten eines Verkehrsstaus, Entscheidungen darüber treffen, welches Straßennetz er benutzen möchte. Eine erste Liste von Kurzzeitcodes kann bereits bei Erwerb des Gerätes vorliegen, so dass sich der Anwender einfach an das neue Freischaltungskonzept gewöhnen kann. Nach Eingabe des Kurzzeitcodes 12 wird der eingegebene Code durch das Navigationssystem 6 überprüft 14. Bei Eingabe eines falschen Codes 8 kommt es zu einem Abbruch des Prozesses 16, oder der Anwender wird zur erneuten Eingabe eines Codes aufgefordert. Bei korrektem Code zeigt das Navigationssystem die Regionen beziehungsweise Länder an, welche für einen begrenzten Zeitraum freigeschaltet werden können 18. Dabei eignet sich eine textuelle Darstellung in Listenform, in welcher der Anwender navigieren kann, oder eine graphische Darstellung der Landkarte, bei welcher die Grenzen der betreffenden Gebiete gekennzeichnet sind. Der Anwender kann nun einfach einen geeigneten Bereich auswählen 20. Zum Beispiel kann der Anwender bei seiner Reise von Deutschland nach Spanien vor dem Grenzübergang nach Frankreich die entsprechende Straßenkarte Frankreichs freischalten lassen. Die digitale Straßenkarte ist nun für 24 Stunden zugänglich 22 und wird nach deren Ablauf wieder gesperrt.

## Patentansprüche

1. Verfahren zur Freischaltung von auf einem Speichermedium abgespeicherten ein Straßennetz abbildenden Straßenkartendaten in einem Navigationssystem in einem Personentransportsystem, insbesondere in einem Kraftfahrzeug, umfassend folgende Schritte:
(a) Bereitstellen mindestens einer Liste, die mindestens einen, vorzugsweise mehrere, Kurzzeitcodes enthält;
(b) Eingabe eines Kurzzeitcodes in das Navigationssystem durch den Anwender;
(c) Überprüfung der Gültigkeit des Kurzzeitcodes durch das Navigationssystem;
(d) Wahl eines Landes oder einer Region durch den Anwender;
(e) Freischaltung der das Straßennetz des gewählten Landes oder der gewählten Region abbildenden Straßenkartendaten zur Benutzung im Navigationssystem für einen begrenzten Zeitraum,
wobei der vierte Schritt (d) vor oder nach dem dritten Schritt (c) erfolgen kann.

2. Verfahren nach Anspruch 1, **dadurch gekennzeichnet, dass** die Liste von Kurzzeitcodes dem Anwender postalisch oder elektronisch zugesandt wird.

3. Verfahren nach Anspruch 1, **dadurch gekennzeichnet, dass** mindestens eine Liste von Kurzzeitcodes dem Navigationsgerät beim Erwerb vorliegt, insbesondere in Form eines Aufklebers einer Plastikkarte oder dergleichen.

4. Verfahren nach Anspruch 3, **dadurch gekennzeichnet, dass** auf dem Aufkleber, der Plastikkarte oder dergleichen die letzten Zeichen durch den Anwender ergänzt werden.

5. Verfahren nach Anspruch 1, **dadurch gekennzeichnet, dass** eine Liste von Kurzzeitcodes nach Eingabe eines Kennwortes, Codes oder dergleichen in das Navigationssystem von dem Navigationssystem erzeugt wird.

6. Verfahren nach einem der vorangehenden Ansprüche, **dadurch gekennzeichnet, dass** der begrenzte Zeitraum der Freischaltung für die Benutzung eines Kurzzeitcodes konstant ist, insbesondere 24 Stunden.

7. Navigationssystem, welches derart eingerichtet ist, dass ein Verfahren zur Freischaltung von auf einem Speichermedium abgespeicherten ein Straßennetz abbildenden Straßenkartendaten gemäß einem der Ansprüche 1 bis 6 durchführbar ist.

## Claims

1. Method for enabling road map data, which are stored on a storage medium and depict a road network, in a navigation system in a passenger transport system, particularly in a motor vehicle, comprising the following steps:
(a) at least one list which contains at least one, preferably a plurality of, short-term code(s) is provided;
(b) a short-term code is input into the navigation system by the user;
(c) the validity of the short-term code is checked by the navigation system;
(d) a country or a region is selected by the user;
(e) the road map data depicting the road network of the selected country or of the selected region are enabled for use in the navigation system for a limited period,
wherein the fourth step (d) can take place before or after the third step (c).

2. Method according to Claim 1, **characterized in that** the list of short-term codes is sent to the user by post or electronically.

3. Method according to Claim 1, **characterized in that** at least one list of short-term codes is available to the navigation appliance when purchased, particularly in the form of a sticker, a plastic card or the like.

4. Method according to Claim 3, **characterized in that** the sticker, the plastic card or the like has the last characters added by the user.

5. Method according to Claim 1, **characterized in that** a list of short-term codes is produced by the navigation system after input of a password, code or the like into the navigation system.

6. Method according to one of the preceding claims, **characterized in that** the limited period of enabling for the use of a short-term code is constant, particularly 24 hours.

7. Navigation system which is set up such that a method for enabling road map data, which are stored on a storage medium and depict a road network, in accordance with one of Claims 1 to 6 can be performed.

## Revendications

1. Procédé de libération de données de carte routière enregistrées sur un support d'enregistrement et représentant un réseau routier dans un système de navigation dans un système de transport de personnes, notamment dans un véhicule automobile, comprenant les étapes suivantes :
a) Mise à disposition d'au moins une liste qui contient au moins un, de préférence plusieurs codes de courte durée ;
b) Saisie d'un code de courte durée dans le système de navigation par l'utilisateur ;
c) Contrôle de la validité du code de courte durée par le système de navigation ;
d) Sélection d'un pays ou d'une région par l'utilisateur ;
e) Libération des données de carte routière représentant le réseau routier du pays sélectionné ou de la région sélectionnée en vue de leur utilisation dans le système de navigation pendant une période limitée,
la quatrième étape (d) pouvant être exécutée avant ou après la troisième étape (c).

2. Procédé selon la revendication 1, **caractérisé en ce que** la liste des codes de courte durée est envoyée à l'utilisateur par voie postale ou électronique.

3. Procédé selon la revendication 1, **caractérisé en ce qu'**au moins une liste de codes de courte durée accompagne le système de navigation lors de l'acquisition, notamment sous la forme d'une étiquette autocollante ou d'une carte en plastique.

4. Procédé selon la revendication 3, **caractérisé en ce que** les derniers caractères sur l'étiquette autocollante ou la carte en plastique sont complétés par l'utilisateur.

5. Procédé selon la revendication 1, **caractérisé en ce qu'**une liste de codes de courte durée est générée par le système de navigation après avoir saisi un mot de passe, un code ou similaire dans le système de navigation.

6. Procédé selon l'une des revendications précédentes, **caractérisé en ce que** la période limitée de libération pour l'utilisation d'un code de courte durée est constante, notamment de 24 heures.

7. Système de navigation qui est configuré de telle sorte qu'il est possible de mettre en oeuvre un procédé de libération de données de carte routière enregistrées sur un support d'enregistrement et représentant un réseau routier selon l'une des revendications 1 à 6.
